Europäisches Patentamt

European Patent Office

Office européen des brevets

(11) Numéro de publication: **0 199 410**
**A1**

## (12) DEMANDE DE BREVET EUROPEEN

(21) Numéro de dépôt: 86200627.7

(22) Date de dépôt: 15.04.86

(51) Int. Cl.4: **H04K 1/00 , H04N 7/167**

(30) Priorité: **19.04.85 FR 8505951**

(43) Date de publication de la demande:
**29.10.86 Bulletin 86/44**

(84) Etats contractants désignés:
**BE DE FR GB IT**

(71) Demandeur: **LA RADIOTECHNIQUE INDUSTRIELLE ET COMMERCIALE Société Anonyme dite:**
**51, rue Carnot BP 301**
**F-92156 Suresnes(FR)**
Demandeur: **N.V. Philips' Gloeilampenfabrieken**
**Groenewoudseweg 1**
**NL-5621 BA Eindhoven(NL)**

(72) Inventeur: **Caprarese, Vincent**
**SOCIETE CIVILE SPID 209 rue de l'Université**
**F-75007 Paris(FR)**
Inventeur: **Chretien, Thierry**
**SOCIETE CIVILE SPID 209 rue de l'Université**
**F-75007 Paris(FR)**
Inventeur: **Dauvillier, Richard**
**SOCIETE CIVILE SPID 209 rue de l'Université**
**F-75007 Paris(FR)**

(74) Mandataire: **Caron, Jean et al**
**SOCIETE CIVILE S.P.I.D. 209, rue de l'Université**
**F-75007 Paris(FR)**

(54) **Système pour la transmission secrète de signaux audio, et téléviseur pour la réception de tels signaux.**

(57) Le codage est réalisé au moyen d'un filtre d'entrée (21) passe bas, d'un premier modulateur - (20), d'un deuxième filtre passe bas (19), d'un deuxième modulateur (18) dont le signal modulant a une fréquence qui est modifiée pseudo-aléatoirement au cours du temps, ce signal étant choisi pseudo-aléatoirement entre deux signaux de fréquences différentes (45, 46), et d'un filtre de sortie (17). Selon l'invention le générateur fournissant deux signaux est constitué par deux oscillateurs à boucle à verrouillage de phase comportant chacun un diviseur de fréquence (7, 9) dans la boucle et commandés par un même générateur de signal de référence (3, 4) le générateur de signal de référence est lui-même constitué d'un oscillateur du même type (3, 4) commandé par le signal de synchronisation de trame de l'émetteur de télévision, et ce dernier ainsi que le signal de référence sont également amenés au générateur pseudo-aléatoire (14), pour commander les instants de changement de signal de modulation.

Le décodage s'effectue de la même manière dans l'ordre inverse.

0 199 410

FIG 1

## "SYSTEME POUR LA TRANSMISSION SECRETE DE SIGNAUX AUDIO, ET TELEVISEUR POUR LA RECEPTION DE TELS SIGNAUX"

La présente invention concerne un nouveau système pour la transmission secrète de signaux audio, et particulèrement des signaux audio associés aux images de télévision.

Le système utilise un dispositif de codage, au moins un canal de transmission, et un dispositif de décodage. Le dispositif de codage comprend, en cascade à partir d'une borne d'éntrée :

-un premier filtre,

-un modulateur relié à un générateur de signal de modulation à fréquence fixe,

-un deuxième filtre,

-un deuxième modulateur relié par un commutateur à deux sorties d'un générateur fournissant sur ces deux sorties deux signaux de modulation à deux fréquences différentes, ledit commutateur étant commandé par un générateur pseudo-aléatoire pour sélectionner l'un ou l'autre desdits deux signaux de modulation et

-un troisième filtre.

Le dispositif de décodage comporte un générateur de tops de trame, un séparateur pour séparer un signal de référence reçu en même temps que les signaux audio codés, et, en cascade à partir d'une borne d'entrée :

-un premier filtre,

-un modulateur relié par un commutateur à deux sorties d'un générateur fournissant sur ces deux sorties deux signaux de modulation à deux fréquences différentes, ledit commutateur étant commandé par un générateur pseudoaléatoire pour sélectionner l'un ou l'autre desdits deux signaux de modulation,

-un deuxième filtre

-un deuxième modulateur relié à un générateur de signal de modulation à fréquence fixe

-un troisième filtre.

Un tel système est connu du brevet JP -A -58 124 343. L'invention se propose de simplifier la construction des dispositifs de codage et de décodage. Elle s'attache en outre à résoudre économiquement un problème posé par l'apparition de bruits de commutation lorsque le passage d'un signal de modulation à l'autre se fait sans précaution particulière.

L'invention fournit un dispositif de codage dont le son crypté est pratiquement inviolable, qui ne produit pas de bruit de commutation, ne nécessite pas de préaccentuation, et utilise des signaux dans la bande de base habituelle des émetteurs pour obtenir une compatibilité directe.

Le dispositif de codage selon l'invention est notamment remarquable en ce que le générateur fournissant deux signaux est constitué par deux oscillateurs à boucle à verrouillage de phase comportant chacun un diviseur de fréquence dans la boucle et commandés par un même générateur de signal de référence, en ce que le générateur de signal de référence est lui-même constitué d'un oscillateur du même type commandé par le signal de synchronisation de trame de l'émetteur de télévision, et en ce que ce dernier et le signal de référence sont également amenés à un circuit de synchronisation du générateur pseudo-aléatoire, pour commander les instants de changement de signal de modulation.

Ainsi le dispositif ne comprend que des diviseurs dont le rapport de divison est faible et permet cependant d'assurer un rapport de phase bien controlé entre les deux oscillateurs de fréquences voisines (14 et 15,2 KHz, par exemple), afin d'éviter les bruits de commutation.

En outre la susdite fréquence fixe étant appelée F, et l'écart entre F et la fréquence de coupure du filtre d'entrée étant appelé F, les susdites deux fréquences différentes sont avantageusement égales à $F + \Delta F$ et $F + 2 \Delta F$, $\Delta F$ étant de préférence compris entre 1 et 3 KHz. Ceci offre l'avantage que les deux ondes résultantes codées, issues du 2è modulateur, peuvent être filtrées par le même filtre, tout en obtenant le meilleur compromis entre la bande passante audio la plus élevée possible et un écart suffisant entre les deux susdites fréquences, écart nécessaire pour rendre inintelligible le signal codé. Ceci sera expliqué plus loin en détail, avec référence aux figures. En outre le système est ainsi compatible directement avec tous les équipements de transmission actuels AM ou FM.

Avantageusement le générateur du signal de référence, dont la fréquence est inférieure a celles des signaux audio, est relié à un circuit de sommation pour ajouter le signal de référence au signal audio, et entre le générateur de signal de référence et le sommateur sont intercalés un circuit déphaseur et un filtre.

Le dispositif de décodage selon l'invention est notamment remarquable en ce que le générateur fournissant deux signaux est avantageusement constitué par deux oscillateurs à boucle à verrouillage de phase comportant chacun un diviseur de fréquence dans la boucle et commandés par le signal de référence, et en ce que le générateur pseudo-aléatoire est relié au séparateur de signal de référence et au générateur de tops trame pour commander les instants de changement de signal de modulation.

Un récepteur de télévision selon l'invention est remarquable en ce que, entre le circuit de détection du son et l'amplificateur de son, est inséré un dispositif de décodage selon l'invention.

La description qui va suivre, en regard des dessins annexés décrivant des exemples non limitatifs fera bien comprendre comment l'invention peut être réalisée.

La figure 1 est un schéma synoptique d'un dispositif de codage selon l'invention.

La figure 2 illustre les spectres de fréquences successifs du canal de son au cours du codage.

La figure 3 est un schéma synoptique d'un dispositif de décodage selon l'invention.

La figure 4 illustre les spectres de fréquences successifs du canal de son au cours du décodage.

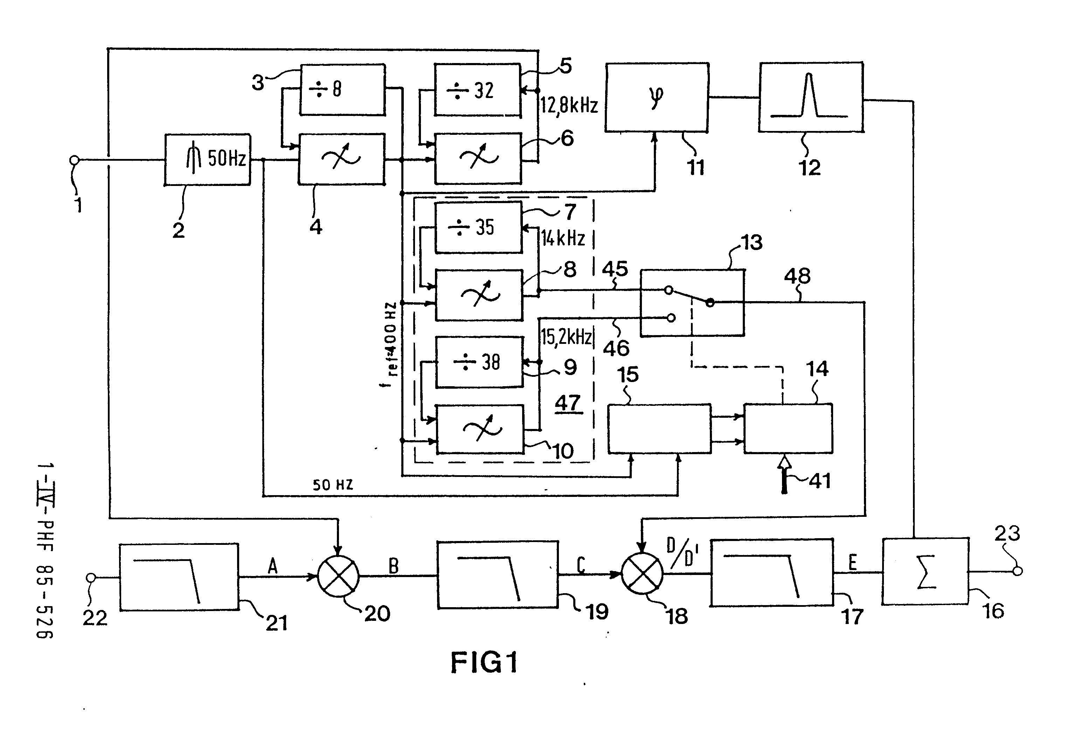

Le dispositif de codage de la figure 1 comporte un filtre d'entrée 21 relié à une borne d'entrée 22 à laquelle est appliqué le signal audio à coder ; la sortie du filtre 21 est reliée à une entrée d'un premier modulateur 20 dont l'autre entrée est reliée à un générateur de signal de modulation 5, 6 à fréquence fixe.

La sortie du modulateur 20 est reliée à l'entrée d'un filtre 19 dont la sortie est reliée à une entrée d'un deuxième modulateur 18, dont l'autre entrée est connectée par la connexion 48 au "doigt" d'un commutateur 13 à deux voies. L'appellation "doigt" est utilisée symboliquement pour faire apparaître plus clairement les interconnexions, mais en réalité le commutateur 13 est un commutateur électronique formé à partir de transistors de commutation analogique.

Une voie 45 du commutateur 13 est reliée à la sortie d'une partie 7, 8 d'un générateur 47 de fréquences, sortie sur laquelle est fourni un signal de modulation, et l'autre voie 46 du commutateur est reliée à la sortie d'une autre partie 9, 10 de ce même générateur 47, sortie sur laquelle est fourni un signal de modulation à une fréquence différente de celle du signal fourni par la partie 7, 8.

Un générateur de séquences binaires pseudo-aléatoires 14 qui ne fait pas partie de l'invention fournit, de façon connue, à partir d'une clef secrète 41, un signal de commande pseudo-aléatoire au commutateur 13, et sous cette commande le signal sur la connexion 48 est tantôt à l'une et tantôt à l'autre des deux fréquences fournies sur lessorties 45, 46 du générateur 47.

Pour transmettre des signaux audio dans une bande de base allant, par exemple, jusqu'à 11,6 kHz, les deux fréquences fournies sur les sorties 45, 46 sont avantageusement égales respectivement à 14 kHz et 15,2 kHz. Les raisons de ce choix seront expliquées plus loin.

La fréquence du signal fourni par le générateur 5, 6 à fréquence fixe est égale à 12,8 kHz. Cette dernière fréquence est donc située entre la bande de base du signal audio et les deux susdites fréquences.

Le générateur 47 est constitué de deux oscillateurs 8, 10 à boucle à verrouillage, respectivement 7, 9, reliés à un même générateur 3, 4 de signal de référence. Ce système est incorporé dans les circuits d'un émetteur de télévision, pour en coder les signaux audio. Le signal de vidéo composite de cet émetteur est amené via une entrée 1 du dispositif à un circuit 2 d'extraction des tops de trame et la fréquence de ces tops de trame, 50 Hz par exemple selon les normes européennes, est multipliée dans un multiplieur 3, 4 auquel est reliée la sortie du circuit 2.

Ce multiplieur qui constitue le générateur de signal de référence est formé d'un oscillateur 4 à boucle 3 à verrouillage de phase, boucle dans laquelle est incorporé un diviseur par 8. Le signal de référence issu de ce multiplieur 3, 4 a donc une fréquence de 50 Hz x 8 = 400 Hz, et est un signal rectangulaire de rapport cyclique 1/2.

Les oscillateurs 8 et 10 possèdent respectivement dans leur boucle 7, 9 à verrouillage de phase un diviseur par 35 et par 38 et fournissent donc des signaux à 400 hz x 35 = 14000 Hz et à 400 Hz x 38 = 15200 Hz.

L'oscillateur 6 possède dans sa boucle 5 un diviseur par 32 et fournit donc un signal à 400 Hz x 32 = 12800 Hz.

Tous ces signaux commandés par le même oscillateur à 400 Hz sont des signaux rectangulaires de rapport cyclique 1/2 et se retrouvent en phase périodiquement, toutes les 2,5 millisecondes (temps qui correspond à une période de signal à 400 Hz). Le même signal à 400 Hz est également appliqué à un circuit de synchronisation 15, ainsi que les tops de trame.

Ce circuit 15 fournit au générateur pseudo-aléatoire 14 des signaux d'horloge et de validation, à partir desquels le générateur 14 détermine les instants de changement de valeur du signal de commande qu'il fournit au commutateur 13. Ainsi, ce commutateur n'est actionné qu'à des instants où les deux signaux à 14 Khz et à 15,2 Khz sont en phase c'est-à-dire à l'instant où ils présentent par exemple ensemble un front de montée, ce qui évite toute transitoire audible lors de la commutation.

Le signal de référence est amené à un circuit de sommation 16, pour ajouter le signal de référence au signal audio. Ce signal a avantageusement une amplitude telle qu'il entraîne un taux de modulation de l'ordre de 10% dans le signal son émis. Entre le générateur 3, 4 de signal de référence et le sommateur 16 est intercalé un circuit déphaseur 11 et un filtre 12.

Le circuit déphaseur a pour but de compenser les différences de phase existant entre la vidéo à l'émetteur, d'où est issu le signal de référence, et le signal audio à la réception, différence de phase due aux différentes manipulations apportées aux signaux, qui est constante et compensée par un réglage, déterminé une fois pour toutes, du déphaseur 11. Le filtre 12 est un filtre en cloche à 400 Hz qui a pour but d'éliminer les harmoniques dans le signal de référence, harmoniques qui risqueraient de perturber la bande des fréquences audibles.

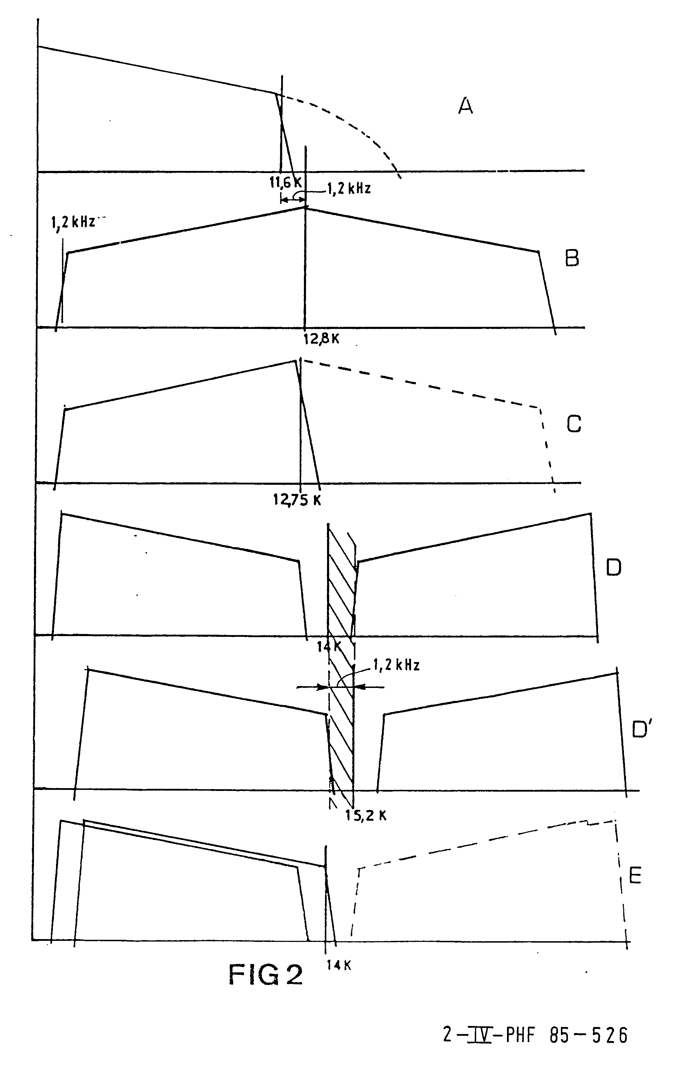

La figure 2 illustre le fonctionnement des circuits de la figure 1 et les effets produit sur le spectre de fréquences.

La figure 2A indique le spectre du signal audio issu du filtre d'entrée. En pointillé est représenté le spectre avant filtrage. Le procédé oblige a limiter la bande passante en-dessous de la fréquence de modulation, qui est indiquée par une ligne verticale, afin d'éviter les retournements de spectre. Cette fréquence est choisie à 12,8 kHz par souci de compatibilité avec le standard de Canal +. Il est évident qu'il est possible de choisir une fréquence plus élevée (également en ce qui concerne les deux autres fréquences) si l'on désire une bande passante plus étendue et si la norme d'émission de télévision permet de transmettre cette bande plus étendue. Le filtre d'entrée est un filtre passe bas d'ordre 7 de type Cauer, et sa fréquence pour 3dB d'atténuation est de 11,6 kHz.

Le spectre est représenté avec une pente pour suggérer que le contenu moyen en puissance des sons aigus est plus petit que celui des sons graves, et aussi pour permettre de visualiser plus clairement les retournements de spectres après les modulations.

La figure 2B indique le spectre du signal audio après le passage dans le premier modulateur à 12,8 kHz. Il s'est crée deux bandes latérales autour de la fréquence de modulation et la bande inférieure présente un spectre retourné par rapport à celui de la figure 2A.

La figure 2C représente le spectre du signal audio après le passage dans le filtre qui suit le premier modulateur. Ce filtre a pour but d'éliminer la bande latérale supérieure (représentée en pointillés), c'est un filtre de Cauer de degré 14, constitué par exemple de deux filtres de degré 7 en cascade, avec une fréquence de 12750 pour 3 dB d'atténuation. Cette fréquence située à 50 Hz en dessous de la fréquence du modulateur introduit donc en pratique une coupure des fréquences basses en dessous de 50 Hz.

Les figures 2D et 2D' indiquent le spectre du signal audio après le passage dans le deuxième modulateur ; la figure 2D correspondant à une fréquence de 14 kHz fournie au deuxième modulateur et la figure 2D' correspondant à une fréquence de 15,2 kHz. Sur ces figures apparaît une caractérisitique essentielle du système : du fait de la différence de 1,2 kHz entre la fréquence de coupure du premier filtre et la fréquence du prmier modulateur, il y a une bande vierge de 1,2 kHz, dans les figures 2B et 2C, à gauche du spectre de la bande audio ; cette bande se retrouve dans les figures 2D, 2D' sous la forme d'un fossé d'une largeur de 2,4 kHz entre les bandes latérales du signal issu du deuxième modulateur, et il y a une bande de fréquence commune entre les deux fossés des figures 2D et 2D', indiqué par une bande verticale hachurée. De ce fait, il est possible d'éliminer la bande latérale supérieure dans les deux cas de figure (D et D') avec un seul filtre dont la fréquence de coupure est située dans cette bande commune.

La figure 2E indique le spectre du signal audio après le filtre qui suit le deuxième modulateur. Les bandes latérales supérieures supprimées sont indiquées en pointillé. Le filtre est un filtre Cauer de degré 7 avec une fréquence de coupure de 14 kHz à OdB. Le spectre obtenu est semblable au spectre de départ, mais avec un décalage en fréquence de 1,2 ou 2,4 kHz par rapport au spectre d'entrée. Le système est ainsi compatible directement avec tous les équipements de transmission actuels AM ou FM. En outre du fait que le spectre est décalé d'au moins 1,2 kHz vers le haut, on a profité de la place laissée libre sous les fréquences audio pour y placer le signal de référence (à 400 Hz) sans perturber les signaux aubibles.

Le choix des fréquences est soumis à un certain nombre d'impératifs. L'écart entre les fréquences est un multiple de la fréquence commune de référence. Si l'on écarte l'une de l'autre les deux fréquences du deuxième modulateur, il faut augmenter aussi l'écart entre la fréquence de coupure du filtre d'entrée et celle du premier modulateur pour conserver le fossé commun des spectres (figures 2D et 2D'). De ce fait, on limite la bande passante. Si l'on réduit au contraire l'écart entre ces fréquences l'effet du codage diminue, et plus ces fréquences se rapprochent plus le son devient intelligible sans décodage. Les fréquences indiquées ci-dessus constituent un bon compromis entre ces exigences contradictoires. Elle peuvent être légèrement modifiées comme on le verra plus loin, mais , si l'on appelle F la fréquence fixe du premier modulateur, et $\Delta F$ l'écart entre F et la fréquence de coupure du filtre d'entrée il est avantageux que les deux fréquences alternées soient égales à $F + \Delta F$ ET $F + 2\Delta F$, et que $\Delta F$ soit un multiple entier de la fréquence de référence.

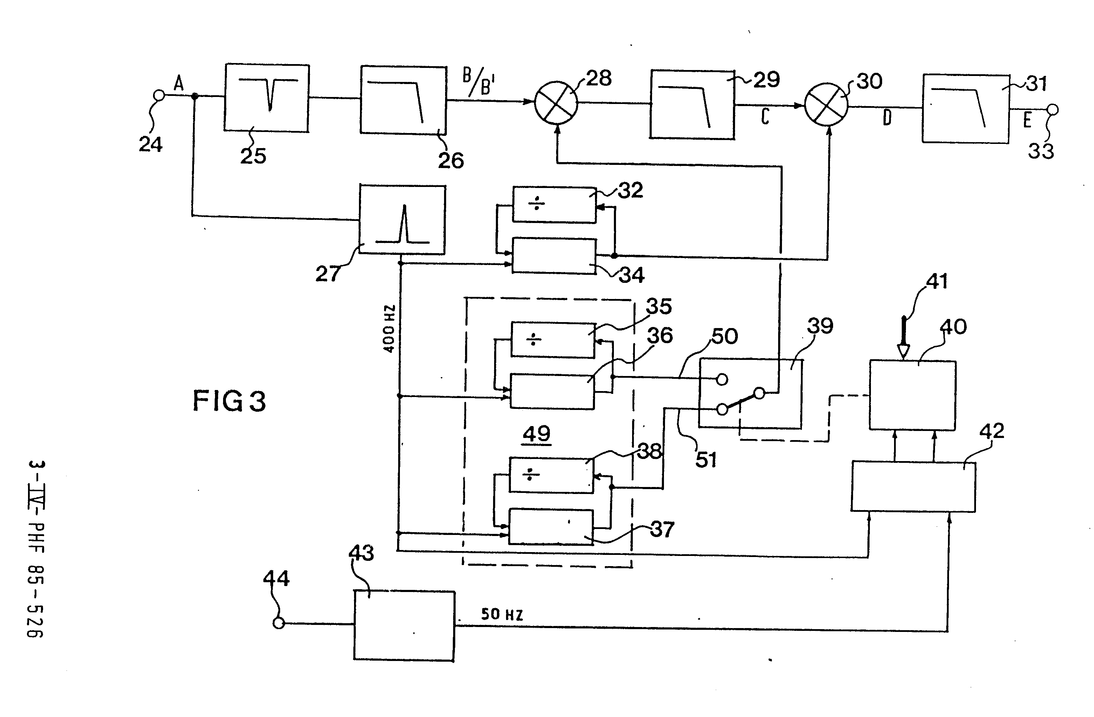

Dans le décodeur de la figure 3 le signal de son, détecté par exemple par les circuits d'un téléviseur non représenté, est amené à l'entrée 24 du décodeur. Il faut remarquer à ce propos que peu importe le type de modulation utilisé pour la transmission entre l'émetteur et le récepteur (AM, FM, dans n'importe quelle variante) puisque c'est sur la modulation basse fréquence elle-même que s'effectue le codage. Le décodeur effectue dans l'ordre inverse les mêmes opérations que le codeur. Toutefois, l'origine du signal de référence est différente dans le codeur et dans le décodeur.

Dans le décodeur on trouve dans l'ordre et branchés en cascade à partir de l'entrée 24, un circuit 25 réjecteur à 400 Hz pour éliminer le signal de référence, un filtre passe bas d'entrée 26, un premier modulateur 28 suivi d'un filtre passe bas 29, d'un deuxième modulateur 30 suivi d'un filtre passe bas 31.

A la sortie de ce filtre passe bas 31 est disponible le signal audio décodé.

En outre un générateur 49 fournit deux signaux de modulation à deux fréquences différentes, chacun étant fourni sur une sortie distincte 50, 51.

Un générateur 40 pseudo aléatoire de signaux de commande est relié, pour le commander, à un commutateur 39 à deux voies. Chaque sortie 50, 51 du générateur 49 est reliée à une des voies du commutateur 39 et le "doigt" de ce commutateur est relié au premier modulateur 28 pour lui fournir son signal modulateur. Ici encore le mot "doigt" est employé symboliquement, le commutateur 39 étant un commutateur analogique entièrement électronique. Un générateur de signal de modulation à fréquence fixe 32, 34 est relié au deuxième modulateur 30 pour lui fournir son signal modulateur.

Le générateur 49 est constitué par deux oscillateurs 36 et 37 à boucle à verrouillage de phase, chaque boucle comprenant un diviseur respectivement 35 et 38, et reliés à un même générateur de référence 27.

Ce dernier est constitué d'un séparateur 27 relié à l'entrée 24 du démodulateur, lequel séparateur extrait du signal d'entrée le signal de référence reçu en même temps que les signaux audio codés. Ce séparateur 27 est constitué par un filtre en cloche laissant passer le 400 Hz.

De même que dans l'émetteur, le générateur 40 pseudo aléatoire fonctionne de façon connue à partir d'une clef secrète 41 et sous le contrôle de signaux d'horloge et de validation fournis par un circuit de synchronisation 42 qui reçoit le signal de référence à 400 Hz issu du séparateur 27, ainsi que des tops trame obtenus par un séparateur de synchronisation de trame 43, relié à la sortie 44 du circuit de détection vidéo (non représenté) du téléviseur.

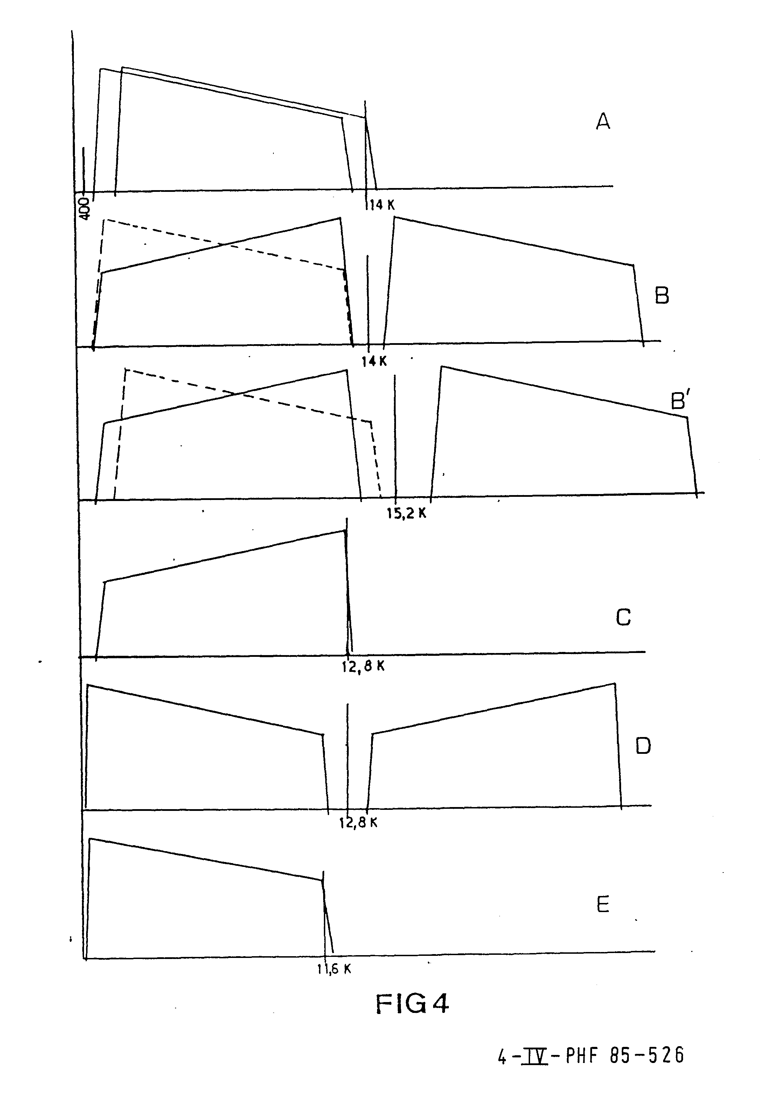

La figure 4 illustre le fonctionnement des circuits de la figure 3 et les effets produits sur ce spectre de fréquences. Il s'agit à peu de chose près des mêmes diagrammes que ceux de la figure 2, pris dans l'ordre inverse, mais toutefois certains filtres ont des performances ou des fréquences d'accord différentes.

Le spectre des signaux d'entrée est représenté en A, identique à celui de la figure 2E, avec toutefois en plus la fréquence de référence indiquée par une raie étroite à 400 Hz. Cette raie est d'abord éliminée par le réjecteur à 400 Hz, puis le signal est filtré dans le filtre d'entrée, du type Cauer de degré 7 et réglé pour OdB à 14kHz (un degré 5 peut suffire, le choix dépendant du degré de qualité recherché).

Ce filtre a pour but de compléter l'élimination de la porteuse à 15,2 kHz, ainsi que l'éliminer des résidus éventuels de fréquence ligne à 15625 Hz.

Le signal est ensuite modulé dans le premier modulateur. Les figures 4B et 4B' indiquent le résultat obtenu. En pointillé est indiqué le spectre du signal d'entrée du modulateur. Si la clef correcte a été donnée au générateur pseudo aléatoire, ce dernier sélectionne à chaque instant une des deux sorties 50, 51, fournissant chacune une fréquence de mo dulation, en synchronisme avec le codeur de l'émetteur. Cela veut dire qu'au spectre d'entrée (en pointillé) de la figure 4B correspond toujours une fréquence de modulation de 14 kHz et qu'au spectre d'entrée (en pointillé) de la figure 4B' correspond toujours une fréquence de modulation de 15,2 kHz. La partie inférieure du spectre résultant indiqué par la figure 4C est donc fixe. La partie supérieure est variable selon celle des deux fréquences en jeu. Un filtrage élimine alors ces bandes latérales supérieures, le filtre étant du type passe bas de Cauer de degré 7 avec une fréquence de coupure de 12,8 kHz à 0 dB, ce qui conduit au spectre C.

Une deuxième modulation à 12,8 kHz conduit au spectre D et un filtrage en sortie élimine la bande latérale supérieure et la porteuse qui en découlent. Le filtre est un filtre passe bas de Cauer de degré 7 accordé pour obtenir O dB à 11,6 kHz. On obtient donc enfin le spectre E qui est pratiquement identique au spectre A de la figure 2, avec une coupure au-dessous de 50 Hz due au filtrage à 12,75 kHz du codeur (figure 2C).

Lors de la réalisation pratique des circuits des figures 1 et 3 la Demanderesse a utilisé pour réaliser les modulateurs des circuits intégrés, par exemple du type MC1496 ou TCA240, ou autre. Ces circuits apportent une bonne réjection de la fréquence de modulation et de la fréquence d'entrée. Pour les filtres passe bas de Cauer ont été utilisés des filtres actifs à base d'amplificateurs opérationnels à grande impédance d'entrée, par exemple du type TL074. Les filtres de degré 7 peuvent être tous identiques, aux valeurs de réglage près. On peut aussi utiliser des filtres à bobines et condensateurs, qui existent tout prêts dans le commerce avec les caractéristiques requises. On peut également utiliser des filtres en circuit intégré à capacités commutées.

Les commutateurs peuvent être réalisés au moyen de circuits intégrés, par exemple du type HEF4053.

Les oscillateurs à boucle à verrouillage de phase peuvent être réalisés au moyen de circuits intégrés HEF4046, les diviseurs de fréquence situés dans les boucles au moyen de circuits intégrés HEF 4024, et le circuit déphaseur au moyen d'un circuit intégré HEF4538.

Le circuit réjecteur et le circuit séparateur peuvent être réalisés aisément chacun au moyen d'un amplificateur opérationnel associé à un circuit en double T dans un boucle de rétroaction.

Le générateur pseudo-aléatoire et son circuit de synchronisation sont réalisés au moyen de circuits intégrés HEF 4035, HEF 4070, HEF 4014. L'horloge du générateur est issue du signal à 400 HZ, divisé de manière à obtenir une horloge à quelques hertz. Le signal de validation est issu du signal de trame à 50 HZ, divisé pour obtenir une période de quelques secondes. Les signaux d'horloge et de validation doivent être synchrones avec une transition du signal à 400 HZ.

L'emploi de tous ces circuits pour réaliser chacune des fonctions citées est bien connu de l'homme du métier : en outre la documentation des constructeurs de ces circuits donne toutes indications utiles.

Dans le cas de fréquences de trame à 60 Hz, comme c'est le cas par exemple aux Etats-Unis d'Amérique, les fréquences utilisées peuvent facilement être adaptées. Par exemple on peut utiliser un signal de base à une fréquence de 300 Hz, soit 5 fois 60Hz, et les diviseurs des oscillateurs 6, 8, 10 ou 34, 36, 37 sont alors cablés pour obtenir des rapports de division fournissant respectivement 43 x 300 Hz = 12900 Hz, 47 x 300 Hz = 14100 Hz et 51 x 300 Hz = 15300 Hz. Les fréquences des filtres sont alors toutes remontées de 100 Hz. Cette manière de faire pourrait d'ailleurs s'appliquer aussi bien aux standards européens puisqu'un signal de référence à 300 Hz peut être obtenu par 6 x 50 Hz, avec toutefois l'inconvénient, pour la France seulement, que la fréquence de 12900 Hz ne serait pas exactement compatible avec "Canal+". On peut bien entendu imaginer bien d'autres combinaisons de fréquences, pourvu qu'elles présentent des écarts entre elles qui restent de l'ordre de 1 à 2 Khz. On pourrait encore, par exemple, utiliser un signal de référence à 625 Hz, obtenu en divisant la fréquence lignes européenne par 25, ou un signal de 525 Hz dans le cas des Etats-Unis.De même les degrés des filtres peuvent être augmentés ou diminués sans sortir du cadre de l'invention, le résultat en étant d'améliorer ou de dégrader, selon le cas, la qualité du signal par rapport à celle obtenue par les circuits décrits ci-dessus.

**Revendications**

1. Dispositif de codage pour la transmission secrète de signaux audio de télévision, comprenant en cascade à partir d'une borne d'entrée :

-un premier filtre,

-un modulateur relié à un générateur de signal de modulation à fréquence fixe,

-un deuxième filtre,

-un deuxième modulateur relié par un commutateur à deux sorties d'un générateur fournissant sur ces deux sorties deux signaux de modulation à deux fréquences différentes, ledit commutateur étant commandé par un générateur pseudo-aléatoire pour sélectionner l'un ou l'autre desdits deux signaux de modulation et

-un troisième filtre,

caractérisé en ce que le générateur fournissant deux signaux est constitué par deux oscillateurs à boucle à verrouillage de phase comportant chacun un diviseur de fréquence dans la boucle et commandés par un même générateur de signal de référence, en ce que ce dernier est lui-même constitué d'un oscillateur du même type commandé par le signal de synchronisation de trame de l'émetteur de télévision, et en ce que ce dernier et le signal de référence sont également amenés à un circuit de synchronisation du générateur pseudo-aléatoire, pour commander les instants de changement de signal de modulation.

2. Dispositif selon la revendication 1, caractérisé en ce que, la susdite fréquence fixe étant appelée F, et l'écart entre F et la fréquence de coupure du filtre d'entrée étant appelée Δ F, les susdites deux fréquences différentes sont égales à F + Δ F et F + 2ΔF.

3. Dispositif de codage selon la revendication 2 caractérisé en ce que Δ F est compris entre 1 et 2 KHZ.

4. Dispositif de codage selon la revendication 1 caractérisé en ce que le générateur de signal de référence est relié à un circuit de sommation pour ajouter le signal de référence au signal audio, la fréquence de référence étant inférieure aux fréquences audio.

5. Dispositif de codage selon la revendication 4, caractérisé en ce qu'entre le générateur de signal de référence et le sommateur sont intercalés un circuit déphaseur et un filtre.

6. Dispositif de décodage pour la réception de signaux audio de télévision émis par le dispositif selon l'une quelconque des revendications 1 à 5, comportant un séparateur pour séparer un signal de référence reçu en même temps que les signaux audio codés, et, en cascade à partir d'une borne d'entrée :

-un premier filtre,

-un modulateur relié par un commutateur à deux sorties d'un générateur fournissant sur ces deux sorties deux signaux de modulation à deux fréquences différentes, ledit commutateur étant commandé par un générateur pseudo-aléatoire pour sélectionner l'un ou l'autre desdits deux signaux de modulation,

-un deuxième filtre,

-un deuxième modulateur relié à un générateur de signal de modulation à fréquence fixe, et

-un troisième filtre,

caractérisé en ce que le générateur fournissant deux signaux est constitué par deux oscillateurs à boucle à verrouillage de phase comportant chacun un diviseur de fréquence dans la boucle et commandés par le signal de référence, et en ce que le générateur pseudo-aléatoire est relié au séparateur de signal de référence et à un générateur de tops trame de l'image associée pour commander les instants de changement de signal de modulation.

7. Récépteur de télévision caractérisé en ce qu'entre son circuit de détection du son et son amplificateur de son, est inséré un dispositif selon la revendication 6.

FIG1

FIG 2

FIG 3

A
24
25
26
B/B'
28
29
30
31
33
C
D
E
27
400 HZ
32
34
35
36
50
39
41
40
49
38
51
37
42
43
44
50 HZ

FIG 4

Office européen
des brevets

**RAPPORT DE RECHERCHE EUROPEENNE**

Numéro de la demande

EP  86 20 0627

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | PATENTS ABSTRACTS OF JAPAN, vol. 7, no. 236 (E-205)[1381], 20 octobre 1983; & JP - A - 58 124 343 (SONY) 23-07-1983 <br> * En entier * | 1 | H 04 K    1/00 <br> H 04 N    7/167 |
| A | IDEM | 4 | |
| Y | EP-A-0 085 453  (RADIOTECHNIQUE) <br> *  Page  1,  ligne  18  - page 2, ligne 24; page 3, ligne 18 - page 6,  ligne  20;  page  8,  lignes 21-32;  figure  6  * & FR - A - 2 520 955 | 1 | |
| A | . | 3,4,6 | |
| A | US-A-3 824 468  (ZEGERS) <br> *  Colonne  3,  ligne 53 - colonne 4, ligne 33 *. | 1 | |

**DOMAINES TECHNIQUES RECHERCHES (Int. Cl.4).**

H 04 K
H 04 N

Le present rapport de recherche a été établi pour toutes les revendications

| Lieu de la recherche | Date d'achèvement de la recherche | Examinateur |
|---|---|---|
| LA HAYE | 29-07-1986 | HOLPER G.E.E. |